# FASCICULE DE BREVET EUROPEEN

(11) **EP 2 504 665 B1**
(45) Date de publication et mention de la délivrance du brevet: **07.01.2015**
(21) Numéro de dépôt: 10801604.9
(22) Date de dépôt: 26.11.2010
(51) Int. Cl.: G01D 5/14, G01D 3/028

(54) **PROCEDE ET CAPTEUR MAGNETIQUE DE MESURE POUR LA DETECTION SANS CONTACT DE MOUVEMENTS**
MESSVERFAHREN UND MAGNETISCHER MESSFÜHLER ZUR KONTAKTLOSEN POSITIONSERFASSUNG
MEASUREMENT METHOD AND MAGNETIC SENSOR FOR CONTACTLESSLY DETECTING MOVEMENT

(30) Priorité: 27.11.2009 FR 0958431
(43) Date de publication de la demande: 03.10.2012
(73) Titulaire: Electricfil Automotive, 01708 Miribel Cedex (FR)
(72) Inventeur: LIEBART, Vincent, 01120 La Boisse (FR)
(74) Mandataire: Thibault, Jean-Marc
(86) Numéro de dépôt international: PCT/FR2010/052549
(87) Numéro de publication internationale: WO 2011/077022

(56) Documents cités:
- WO-A1-89/10540
- FR-A1- 2 452 716
- FR-A2- 2 197 213

## Description

La présente invention concerne le domaine technique des capteurs magnétiques sans contact adaptés pour repérer la position d'un mobile évoluant selon une trajectoire déterminée linéaire et/ou en rotation.

L'objet de l'invention trouve une application particulièrement avantageuse mais non exclusivement dans le domaine des véhicules automobiles en vue d'équiper différents organes à déplacement limité linéaires et/ou rotatifs dont la position doit être connue.

L'objet de l'invention trouve par exemple des applications préférées dans le domaine des capteurs de position pour la boîte de vitesses ou pour le dispositif de freinage d'un véhicule automobile.

Dans l'état de la technique il existe de nombreux types de capteurs sans contact adaptés pour connaître la position linéaire d'un mobile se déplaçant par exemple en translation. Il est ainsi connu un capteur du type optique dont l'inconvénient majeur réside dans son prix de fabrication. Un capteur du type à courant de Foucault bobiné présente de par sa conception un encombrement important limitant ses applications.

Il est par ailleurs connu des capteurs de type magnétique comme par exemple le capteur décrit par le brevet EP 0 979 988. Ce capteur magnétique sans contact comporte un système de mesure placé à proximité d'un aimant en mouvement dont la position est à détecter. Ce système de mesure délivre un signal électrique relatif à la direction de l'induction magnétique. L'aimant est aimanté parallèlement à la course de la pièce mobile pour un mouvement linéaire et tangentiellement pour un mouvement rotatif.

De manière classique, le système de mesure d'un tel capteur possède des seuils supérieur et inférieur pour la détection de l'amplitude de l'induction dont la direction est à détecter. Si le respect du seuil supérieur ne pose généralement pas de problème, le respect du seuil inférieur de détection impose l'utilisation d'un aimant volumineux et relativement long correspondant sensiblement à environ la moitié de la course à détecter. L'utilisation d'un système de mesure plus sensible c'est-à-dire dont le seuil inférieur de détection est plus faible, n'est pas une solution envisageable car le champ externe est alors d'autant perturbateur par rapport au signal à détecter.

Il est également connu, par le document WO 89/10540, un capteur magnétique sans contact comportant un système de mesure placé à proximité d'un premier et d'un deuxième aimants disposés côte à côte et montés mobiles pour se déplacer selon un mouvement linéaire dont la position est à détecter. Le système de mesure est associé à un troisième aimant centré par rapport aux premier et deuxième aimants. Le système de mesure délivre un signal de mesure proportionnel à l'amplitude de l'induction magnétique résultant des trois aimants. L'inconvénient majeur d'un tel capteur est l'obtention d'un signal électrique de sortie non monotone au cours du mouvement. En effet, à un signal électrique de sortie correspond deux positions mécaniques possibles. Le principe de ce capteur se borne donc à une détection d'éloignement par rapport au centre de la course, et non à une détermination de la position absolue du système aimanté. De plus, de part la capture directe de l'amplitude de l'induction magnétique, le signal de sortie est sensible aux variations d'entrefer et de température. Enfin, le système aimanté est encombrant, plus long que la course à détecter.

Par ailleurs, le document FR 2 452 716 décrit un dispositif de mesure de déplacement en utilisant la technologie magnéto-résistive, sensible à la direction de l'induction magnétique, mais ne pouvant délivrer de signal relatif à cette grandeur directement. C'est pourquoi le capteur décrit dans ce document est constitué d'un assemblage d'éléments magnéto-résistifs, dont le rôle n'est pas de capturer la direction de l'induction en un point de l'espace. Ainsi, le capteur de mesure se trouve être plus grand que la course à détecter.

Dans le même sens, le document FR 2 197 213 décrit un dispositif de mesure à résistance variable comportant deux systèmes à résistance variable placés à proximité d'un générateur mobile de production d'un champ de commande. Lorsque le générateur se déplace, la résistance des systèmes varie permettant de déterminer la position relative du générateur mobile. L'inconvénient majeur de ce dispositif de mesure concerne l'encombrement du système de mesure, composé d'aimants et de pièces ferromagnétiques, par rapport au signal de sortie pouvant être traité.

L'objet de l'invention vise donc à remédier aux inconvénients de l'état de la technique en proposant un procédé de détection de mouvements sans contact permettant de s'affranchir des problèmes liés à la variation d'entrefer et de s'adapter aux contraintes des seuils de détection du système de mesure tout en réduisant de manière sensible l'encombrement et en particulier le volume de l'aimant.

Pour atteindre un tel objectif, le procédé de mesure selon l'invention, pour la détection magnétique sans contact de mouvements relatifs le long d'une trajectoire, entre un système de création d'une induction magnétique principale et un système de mesure sensible à la direction de l'induction magnétique, le système de création assurant la création d'une induction magnétique principale dont la direction est variable au moins dans un plan et détectée par le système de mesure pour déterminer la position relative le long de cette trajectoire.

Selon l'invention, le procédé de mesure consiste à soumettre le système de mesure à une induction magnétique de compensation dont la direction est fixe et de sens opposé au sens de l'induction magnétique principale maximale mesurée par le système de mesure et délivrée uniquement par le système de création, le procédé consistant à déterminer la direction d'une induction magnétique résultante de la combinaison des inductions magnétiques principale et de compensation en mesurant les deux composantes de l'induction magnétique résultante normales entre elles et variant respectivement comme sensiblement des fonction cosinus et sinus de l'angle de l'induction magnétique résultante.

Le procédé selon l'invention peut comporter en combinaison au moins l'une et/ou l'autre des caractéristiques additionnelles suivantes :
- soumettre le système de mesure à l'induction magnétique de compensation dont l'amplitude présente une valeur fixe qui combinée à l'amplitude minimale mesurée par le système de mesure et délivrée uniquement par le système de création conduit à une valeur d'amplitude supérieure au seuil inférieur de détection du système de mesure,
- la direction de l'induction magnétique principale varie sur une plage sensiblement de l'ordre de 360°,

Un autre objet de l'invention est de proposer un capteur magnétique de mesure pour la détection magnétique sans contact de mouvements relatifs le long d'une trajectoire, entre un système de création d'une induction magnétique principale et un système de mesure sensible à la direction de l'induction magnétique, le système de création assurant la création d'une induction magnétique principale dont la direction est variable au moins dans un plan et détectée par le système de mesure pour déterminer la position relative le long de cette trajectoire.

Selon l'invention, le capteur magnétique comporte un système de création d'une induction magnétique de compensation, associé au système de mesure pour soumettre ledit système de mesure à une induction magnétique de compensation dont la direction est fixe et de sens opposé au sens de l'induction magnétique principale maximale mesurée par le système de mesure et délivrée uniquement par le système de création, le système de mesure mesurant l'induction magnétique résultante de la combinaison de l'induction magnétique principale et de l'induction magnétique de compensation, en mesurant les deux composantes de l'induction magnétique résultante normales entre elles et variant respectivement comme sensiblement des fonctions cosinus et sinus de l'angle de l'induction magnétique résultante.

L'objet de l'invention peut comporter en combinaison au moins l'une et/ou l'autre des caractéristiques additionnelles suivantes :
- le système de création d'une induction magnétique de compensation délivre une induction magnétique de compensation dont l'amplitude présente une valeur fixe qui combinée à l'amplitude minimale mesurée par le système de mesure et délivrée par le système de création conduit à une valeur d'amplitude supérieure au seuil inférieur de détection du système de mesure,
- l'induction magnétique de compensation créée par ledit système de création possède une direction normale à la trajectoire,
- l'induction magnétique de compensation créée par ledit système de création possède une direction normale à la trajectoire qui est linéaire ou circulaire,
- le système de création d'une induction magnétique principale et le système de création d'une induction magnétique de compensation sont réalisés par des aimants.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'un exemple de réalisation d'un capteur magnétique conforme à l'invention à aimantation normale par rapport à une trajectoire linéaire T.
Les **Figures 2A à 2C** illustrent les diverses positions du capteur illustré à la **Fig. 1** le long de la trajectoire linéaire T.
La **Figure 3A** est un graphe illustrant les variations de direction de l'induction magnétique principale B du capteur illustré à la **Fig. 1** en fonction du déplacement x le long de la trajectoire T.
La **Figure 3B** est un graphe illustrant la direction de l'induction magnétique de compensation B₁ du capteur illustré à la **Fig. 1** en fonction du déplacement x le long de la trajectoire T.
La **Figure 3C** est un graphe illustrant la direction de l'induction magnétique résultante Br combinant les inductions magnétiques principale B et de compensation B₁, en fonction du déplacement x le long de la trajectoire T.
La **Figure 4** est un graphe illustrant l'amplitude A de l'induction magnétique résultante Br du capteur illustré à la **Fig. 1** en fonction du déplacement x le long de la trajectoire T.
La **Figure 5** illustre un capteur magnétique conforme à l'invention avec un principe d'aimantation normale par rapport à une trajectoire de rotation.

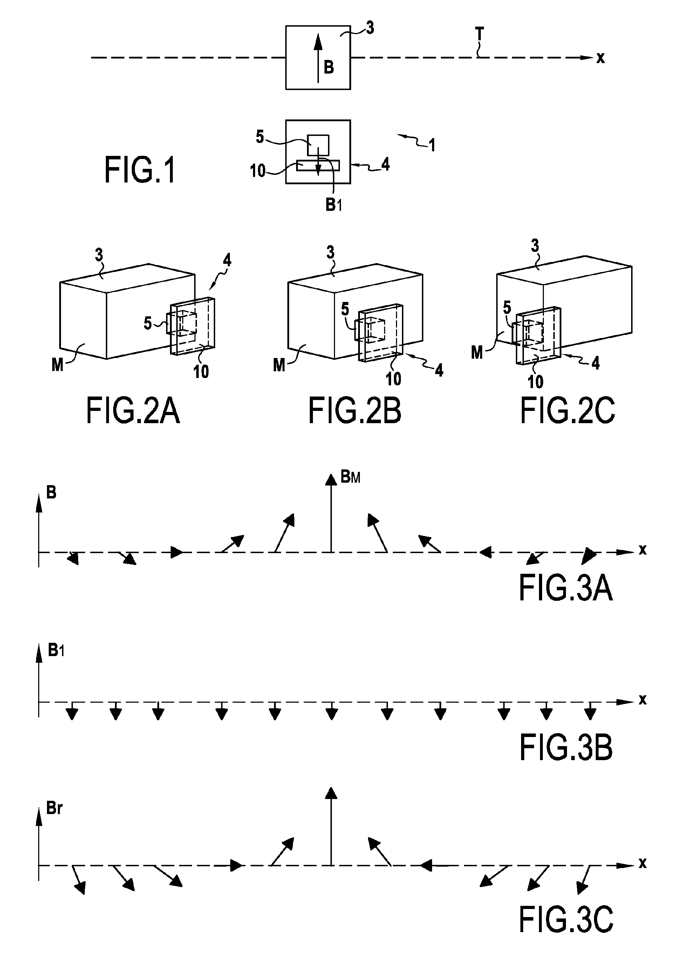

Tel que cela ressort plus précisément de la **Fig. 1****,** l'objet de l'invention concerne un capteur magnétique **1** adapté pour déterminer les mouvements relatifs entre un système de création **3** d'une induction magnétique **B** et un système de mesure **4** sensible à la direction de l'induction magnétique. Dans l'exemple illustré, le système de mesure **4** est fixe et le système de création **3** de l'induction magnétique **B** est mobile selon une trajectoire **T.** Selon cette variante de réalisation, le système de création **3** d'une induction magnétique **B** est assemblé, comme illustré aux **Fig. 2A** à **2C** avec le mobile **M** dont la position est à déterminer. Bien entendu, il peut être prévu un montage inversé dans lequel le système de création **3** d'une induction magnétique **B** est fixe tandis que le système de mesure **4** est lié au mobile **M** dont la position est à détecter.

Dans l'exemple illustré à la **Fig. 1****,** la trajectoire **T** est linéaire. Tel que cela ressort des **Fig. 2A** à **2C****,** le mobile **M** équipé du système de création **3** est donc apte à occuper toutes les positions entre ses deux positions de fin de course illustrées aux **Fig. 2A** et **2C****,** la **Fig. 2B** illustrant le mobile **M** dans sa position médiane ou à demi-course. Le système de création **3** assure la création d'une première induction magnétique **B** dite principale dont la direction est variable dans au moins un plan à savoir le plan de la feuille dans l'exemple illustré et comme cela apparaît clairement à la **Fig. 3A****.** Selon cet exemple, l'aimantation est considérée comme normale à la trajectoire **T** puisque l'induction magnétique principale **B** présente une amplitude maximale **B_{M}** lorsque la direction de l'induction magnétique principale **B** est perpendiculaire à la trajectoire **T.**

Il doit être noté que dans l'exemple illustré, la direction de l'induction magnétique **B** varie sur une plage sensiblement de l'ordre de 360°, le long de la trajectoire **T.**

De préférence, le système de création **3** est réalisé par un aimant dit principal qui dans l'exemple illustré à la **Fig. 1****,** présente une direction d'aimantation ou un axe magnétique qui est perpendiculaire à la trajectoire **T.**

Conformément à l'invention, le capteur magnétique de mesure **1** comporte un système **10** de création d'une deuxième induction magnétique dite de compensation **B₁** pour soumettre le système de mesure **4** à une induction magnétique de compensation **B₁** dont la direction est fixe et de sens opposée au sens de l'induction magnétique maximale **B_{M}** mesurée par le système de mesure et délivrée uniquement par le système de création **3.** Dans l'exemple illustré et tel que cela ressort de la **Fig. 3B****,** le système de création **10** d'une induction magnétique de compensation **B₁** délivre donc une induction magnétique de compensation **B₁** de direction normale à la trajectoire **T** en présentant un sens opposé par rapport au sens de l'induction magnétique principale maximale **B_{M}** et mesurée par le système de mesure **4.** Le système de création **10** de l'induction magnétique de compensation **B₁** est réalisée avantageusement par un aimant dit de compensation assemblé ou fixé sur le système de mesure **4** mais ne faisant pas partie proprement dit du système de mesure **4.**

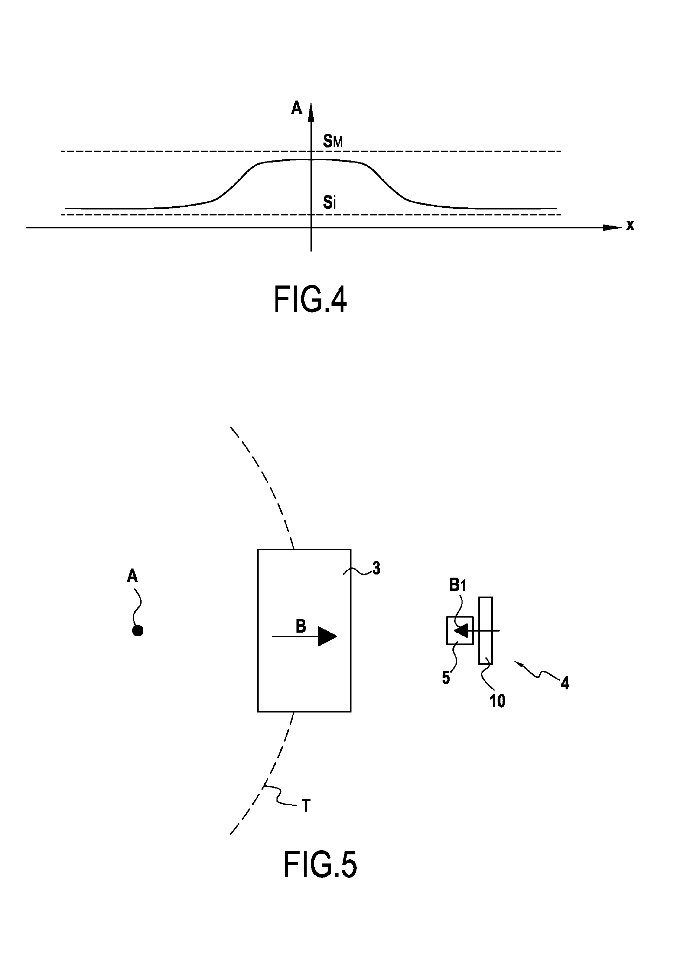

Il doit être noté que le système de mesure **4** mesure, en un point de l'espace, la direction de l'induction magnétique résultante **Br** correspondant à la combinaison de la première induction magnétique dite principale **B** et de la deuxième induction magnétique dite de compensation **B₁.** Les variations de direction de l'induction magnétique résultante **Br** vue par le système de mesure **4** est représentée à la **Fig. 3C** tandis que la Fig. **4** représente l'amplitude **A** de l'induction magnétique résultante **Br** en fonction du déplacement **x** selon la trajectoire T. Cette **Fig. 4** montre le seuil supérieur de détection **S_{M}** et le seuil inférieur de détection **Si** du système de mesure **4.**

Le système de mesure **4** est sensible à la variation de la direction de l'induction magnétique résultante **Br** en un point de l'espace, considérant comme ponctuelle toute mesure d'une grandeur sur une distance très inférieure aux distances caractéristiques du système, par exemple la course mécanique d'étude. De manière avantageuse, pour détecter la variation de direction de l'induction magnétique résultante **Br,** on peut utiliser les technologies Hall ou magnéto-résistive pour la capture de deux composantes de l'induction magnétique, en un point de l'espace, normales entre elles dont l'une varie comme le sinus de l'angle de l'induction magnétique résultante **Br** et l'autre comme le cosinus de cet angle. La mesure de l'angle peut alors être déduite de la mesure de ces deux composantes par le calcul de la fonction arctangente du rapport entre les deux grandeurs mesurées. L'opération de rapport entre les deux composantes sensibles de manière équivalente à l'amplitude de l'induction rend la sortie du système de mesure insensible à cette amplitude. De toutes manières, qu'importe l'opération qu'utilise l'élément de détection pour déterminer la direction de l'induction magnétique, qu'il s'agisse d'un traitement de grandeurs sensibles à l'amplitude de cette induction, ou bien l'emploi d'une technologie sensible directement à la direction de l'induction magnétique, la sortie du système de mesure ne sera pas sensible à l'amplitude de l'induction. Dans l'exemple illustré, le système de mesure **4** comporte au moins un élément **5** de détection sensible à la direction de l'induction magnétique. Par exemple, un tel élément de détection **5** peut être réalisé par l'association de deux assemblages Hall ou magnéto-résistifs sensibles à l'amplitude de l'induction dans deux directions normales entre elles, relié à des moyens de traitement des signaux de sortie délivrés par l'élément de détection **5,** pour le calcul du rapport de ces deux composantes et de la fonction arctangente du résultat obtenu.

De manière connue, le système de mesure **4** comportant au moins un élément de détection relié à des moyens de traitement, délivre ainsi un signal proportionnel à la direction de l'induction magnétique mesurée au point de déplacement relatif du système de mesure **4** par rapport au système de création **3.** Cette direction étant continue et monotone, le système de mesure **4** permet ainsi de déterminer la position du mobile sur sa trajectoire en fonction de la direction de l'induction magnétique résultante **Br.**

Il doit être considéré que l'aimant de compensation **10** ne modifie pas la direction de l'induction magnétique résultante **Br** mesurée par le système de mesure **4** lorsque l'aimant principal **3** est proche du système de mesure **4** (correspondant au milieu de la course du mobile **M).** Par contre, dans cette position, cet aimant de compensation **10** abaisse l'amplitude **A** de l'induction **Br** mesuré par le système de mesure **4** puisque l'induction maximale **B_{M}** est diminuée de la valeur de l'induction de compensation **B₁.** Lorsque l'aimant principal **3** s'éloigne du système de mesure **4,** l'aimant principal **3** perd de son influence sur l'induction magnétique résultante **Br** mesurée par le système de mesure **4.** L'aimant de compensation **10** prend le pas sur l'aimant principal **3** en imposant le sens et l'amplitude à l'induction résultante **Br** mesurée par le système de mesure **4.** En fin de course, l'induction magnétique résultante mesurée **Br** reste au dessus du seuil inférieur **Si** de détection du système de mesure **4.** En d'autres termes, l'amplitude de l'induction magnétique de compensation **B₁** présente une valeur fixe de manière qu'en combinaison avec l'amplitude minimale de l'induction magnétique principale **B** mesurée par le système de mesure **4,** l'induction magnétique résultante **Br** présente une valeur d'amplitude supérieure au seuil inférieur de détection **Si.**

L'adjonction d'un système de création **10** d'une induction magnétique de compensation **B₁** permet de s'adapter facilement à la contrainte des seuils inférieur et supérieur du système de mesure **4** pour l'amplitude **A** de l'induction magnétique résultante **Br** dont la direction est à détecter. L'objet de l'invention permet donc de conserver les valeurs classiques des seuils de détection typiquement égales à 70 mT et 20 mT de sorte que le champ magnétique externe ne perturbe pas le signal à détecter.

Par ailleurs, cette invention permet de réduire le volume de l'aimant principal **3** à environ un facteur **2** par rapport à un capteur ne comportant pas d'aimant de compensation **10.**

Avantageusement, la trajectoire **T** du mobile dont la position est à détecter est symétrique par rapport à la position centrale de l'aimant principal **3** correspondant à la position dans laquelle cet aimant principal impose sur le système de mesure, l'induction magnétique de valeur maximale. Dans cette configuration, la rotation de l'induction magnétique varie sur près de 180° de part et d'autre de la position centrale (demi-course du mobile).

Bien entendu, les sens de l'induction magnétique délivrée par l'aimant principal **3** et l'aimant de compensation **10** peuvent être inversés.

Dans les exemples qui précèdent, la direction de l'aimantation est normale à une trajectoire **T** linéaire. Bien entendu, le principe de l'invention peut s'appliquer à la détection de mouvements selon une trajectoire de rotation. La **Fig. 5** illustre un capteur magnétique **1** dont le mobile **M** présente une trajectoire **T** de rotation autour d'un axe **A** avec l'aimantation normale à la trajectoire **T.**

L'invention n'est pas limitée aux exemples décrits et représentés car diverses modifications peuvent y être apportées sans sortir de son cadre.

## Revendications

1. Procédé de mesure pour la détection magnétique sans contact de mouvements relatifs le long d'une trajectoire **(T),** entre un système de création **(3)** d'une induction magnétique principale **(B)** et un système de mesure **(4)** sensible à la direction de l'induction magnétique, le système de création **(3)** assurant la création d'une induction magnétique principale **(B)** dont la direction est variable au moins dans un plan et détectée par le système de mesure **(4)** pour déterminer la position relative le long de cette traiectoire, le procédé consistant à soumettre le système de mesure **(4)** à une induction magnétique de compensation **(B₁)** dont la direction est fixe et de sens opposé au sens de l'induction magnétique principale maximale **(B_{M})** mesurée par le système de mesure **(4)** et délivrée uniquement par le système de création **(3)** et à déterminer la direction d'une induction magnétique **(Br)** résultante de la combinaison des inductions magnétiques principale **(B)** et de compensation **(B₁)** en mesurant les deux composantes de l'induction magnétique résultante **(Br)** normales entre elles et variant respectivement comme sensiblement des fonction cosinus et sinus de l'angle de l'induction magnétique résultante **(Br).**

2. Procédé selon la revendication 1, **caractérisé en ce que** la direction de l'induction magnétique principale **(B)** varie sur une plage sensiblement de l'ordre de 360° le long de la trajectoire **(T).**

3. Procédé de mesure selon la revendication 1, **caractérisé en ce qu'**il consiste à soumettre le système de mesure **(4)** à l'induction magnétique de compensation **(B₁)** dont l'amplitude présente une valeur fixe qui combinée à l'amplitude minimale mesurée par le système de mesure **(4)** et délivrée uniquement par le système de création **(3),** conduit à une valeur d'amplitude supérieure au seuil inférieur de détection **(Si)** du système de mesure **(4).**

4. Capteur magnétique de mesure pour la détection magnétique sans contact de mouvements relatifs le long d'une trajectoire **(T),** entre un système de création **(3)** d'une induction magnétique principale **(B)** et un système de mesure **(4)** sensible à la direction de l'induction magnétique, le système de création **(3)** assurant la création d'une induction magnétique principale **(B₁)** dont la direction est variable au moins dans un plan et détectée par le système de mesure **(4)** pour déterminer la position relative le long de cette trajectoire, le capteur comportant un système de création **(10)** d'une induction magnétique de compensation **(B₁),** associé au système de mesure **(4)** pour soumettre ledit système de mesure à une induction magnétique de compensation **(B₁)** dont la direction est fixe et de sens opposé au sens de l'induction magnétique principale **(B_{M})** maximale mesurée par le système de mesure **(4)** et délivrée uniquement par le système de création **(3),** le système de mesure **(4)** mesurant l'induction magnétique résultante **(Br)** de la combinaison de l'induction magnétique principale **(B)** et de l'induction magnétique de compensation **(B₁)** en mesurant les deux composantes de l'induction magnétique résultante **(Br)** normales entre elles et variant respectivement comme sensiblement des fonctions cosinus et sinus de l'angle de l'induction magnétique résultante **(Br).**

5. Capteur magnétique de mesure selon la revendication 4, **caractérisé en ce que** le système de création **(10)** d'une induction magnétique de compensation **(B₁)** délivre une induction magnétique de compensation **(B₁)** dont l'amplitude présente une valeur fixe qui combinée à l'amplitude minimale mesurée par le système de mesure **(4)** et délivrée par le système de création **(3)** conduit à une valeur d'amplitude supérieure au seuil inférieur de détection **(Si)** du système de mesure **(4).**

6. Capteur magnétique de mesure selon la revendication 4 ou 5, **caractérisé en ce que** l'induction magnétique de compensation **(B₁)** créée par ledit système de création **(10)** possède une direction normale à la trajectoire **(T).**

7. Capteur magnétique de mesure selon la revendication 6, **caractérisé en ce que** l'induction magnétique de compensation **(B₁)** créée par ledit système de création **(10)** possède une direction normale à la trajectoire **(T)** qui est linéaire ou circulaire.

8. Capteur magnétique de mesure selon l'une des revendications 4 à 7, **caractérisé en ce que** le système de création **(3)** d'une induction magnétique principale **(B)** et le système de création **(10)** d'une induction magnétique de compensation **(B₁)** sont réalisés par des aimants.

## Patentansprüche

1. Messverfahren zur kontaktlosen magnetischen Erfassung von relativen Bewegungen entlang einer Bahn (T) zwischen einem System (3) zur Erzeugung einer magnetischen Hauptinduktion (B) und einem Messsystem (4), das für die Richtung der magnetischen Induktion empfindlich ist, wobei das Erzeugungssystem (3) die Erzeugung einer magnetischen Hauptinduktion (B) gewährleistet, deren Richtung zumindest in einer Ebene variabel ist, und die von dem Messsystem (4) erfasst wird, um die relative Position entlang dieser Bahn zu bestimmen,
wobei das Verfahren darin besteht, das Messsystem (4) einer magnetischen Ausgleichsinduktion (B₁) zu unterziehen, deren Richtung fest und zur Richtung der maximalen magnetischen Hauptinduktion (B_{M}) entgegengesetzt ist, die von dem Messsystem (4) gemessen und nur vom Erzeugungssystem (3) geliefert wird, und die Richtung einer magnetischen Induktion (Br) zu bestimmen, die aus der Kombination der magnetischen Hauptinduktion (B) und Ausgleichsinduktion (B₁) resultiert, wobei die beiden Komponenten der resultierenden magnetischen Induktion (Br) gemessen werden, die normal zueinander sind und jeweils im Wesentlichen als Cosinus- und Sinus-Funktion des Winkels der resultierenden magnetischen Induktion (Br) variieren.

2. Verfahren nach Anspruch 1, **dadurch gekennzeichnet, dass** die Richtung der magnetischen Hauptinduktion (B) in einem Bereich von im Wesentlichen ungefähr 360° entlang der Bahn (T) variiert.

3. Messverfahren nach Anspruch 1, **dadurch gekennzeichnet, dass** es darin besteht, das Messsystem (4) der magnetischen Ausgleichsinduktion (B₁) zu unterziehen, deren Amplitude einen festen Wert aufweist, der in Kombination mit der Mindestamplitude, die vom Messsystem (4) gemessen und nur vom Erzeugungssystem (3) geliefert wird, zu einem größeren Amplitudenwert als die untere Erfassungsschwelle (Si) des Messsystems (4) führt.

4. Magnetischer Messfühler zur kontaktlosen magnetischen Erfassung von relativen Bewegungen entlang einer Bahn (T) zwischen einem System (3) zur Erzeugung einer magnetischen Hauptinduktion (B) und einem Messsystem (4), das für die Richtung der magnetischen Induktion empfindlich ist, wobei das Erzeugungssystem (3) die Erzeugung einer magnetischen Hauptinduktion (B₁) gewährleistet, deren Richtung zumindest in einer Ebene variabel ist, und die von dem Messsystem (4) erfasst wird, um die relative Position entlang dieser Bahn zu bestimmen,
wobei der Fühler umfasst:
ein System (10) zur Erzeugung einer magnetischen Ausgleichsinduktion (B₁), das mit dem Messsystem (4) verbunden ist, um das Messsystem einer magnetischen Ausgleichsinduktion (B₁) zu unterziehen, deren Richtung fest und zur Richtung der maximalen magnetischen Hauptinduktion (B_{M}) entgegengesetzt ist, die von dem Messsystem (4) gemessen und nur von dem Erzeugungssystem (3) geliefert wird, wobei das Messsystem (4) die resultierende magnetische Induktion (Br) aus der Kombination der magnetischen Hauptinduktion (B) und der magnetischen Ausgleichsinduktion (B₁) misst, wobei die beiden Komponenten der resultierenden magnetischen Induktion (Br) gemessen werden, die zueinander normal sind und jeweils im Wesentlichen als Cosinus- und Sinus-Funktion des Winkels der resultierenden magnetischen Induktion (Br) variieren.

5. Magnetischer Messfühler nach Anspruch 4, **dadurch gekennzeichnet, dass** das Erzeugungssystem (10) einer magnetischen Ausgleichsinduktion (B₁) eine magnetische Ausgleichsinduktion (B₁) liefert, deren Amplitude einen festen Wert aufweist, der in Kombination mit der Mindestamplitude, die von dem Messsystem (4) gemessen und von dem Erzeugungssystem (3) geliefert wird, zu einem größeren Amplitudenwert als die untere Erfassungsschwelle (Si) des Messsystems (4) führt.

6. Magnetischer Messfühler nach Anspruch 4 oder 5, **dadurch gekennzeichnet, dass** die magnetische Ausgleichsinduktion (B₁), die von dem Erzeugungssystem (10) erzeugt wird, eine Richtung normal auf die Bahn (T) besitzt.

7. Magnetischer Messfühler nach Anspruch 6, **dadurch gekennzeichnet, dass** die magnetische Ausgleichsinduktion (B₁), die von dem Erzeugungssystem (10) erzeugt wird, eine Richtung normal auf die Bahn (T) besitzt, die linear oder kreisförmig ist.

8. Magnetischer Messfühler nach einem der Ansprüche 4 bis 7, **dadurch gekennzeichnet, dass** das Erzeugungssystem (3) einer magnetischen Hauptinduktion (B) und das Erzeugungssystem (10) einer magnetischen Ausgleichsinduktion (B₁) durch Magneten verwirklicht sind.

## Claims

1. A measuring method for contactless magnetic detection of relative movements along a trajectory (T) between a creation system (3) for creating a main magnetic field (B) and a measuring system (4) sensitive to the direction of the magnetic field, the creation system (3) creating a main magnetic field (B) of direction that is variable at least in a plane and that is detected by the measuring system (4) in order to determine the relative position along that trajectory, the method consisting in subjecting the measuring system (4) to a compensation magnetic field (B1) of direction that is fixed and opposite to the direction of the maximum main magnetic field (B_{M}) measured by the measuring system (4) and delivered solely by the main creation system (3) and in determining the directions of a resultant magnetic field (Br) resulting from the combination of the main magnetic field (B) and the compensation magnetic field (B1), by measuring the two mutually-orthogonal components of the resultant magnetic field (Br) varying respectively substantially as cosine and sine functions of the angle of the resultant magnetic field (Br).

2. A method according to claim 1, **characterized in that** the direction of the main magnetic field (B) varies over a range substantially of the order of 360° along the trajectory (T).

3. A measuring method according to claim 1, **characterized in that** it consists in subjecting the measuring system (4) to the compensation magnetic field (B₁) of amplitude that has a fixed value that, combined with the minimum amplitude measured by the measuring system (4) and delivered solely by the main creation system (3), yields an amplitude value above the lower detection threshold (Si) of the measuring system (4).

4. A measurement magnetic sensor for contactless magnetic detection of relative movement along a trajectory (T) between a creation system (3) for creating a main magnetic field (B) and a measuring system (4) sensitive to the direction of the magnetic field, the creation system (3) creating a main magnetic field (B₁) of direction that varies at least in a plane and that is detected by the measuring system (4) in order to determine the relative position along that trajectory, the sensor comprising a compensation creation system (10) for creating a compensation magnetic field (B1) associated with the measuring system (4) for subjecting said measuring system to a compensation magnetic field (B₁) of direction that is fixed and opposite to the direction of the maximum main magnetic field (B_{M}) measured by the measuring system (4) and delivered solely by the main creation system (3), the measuring system (4) measuring the resultant magnetic field (Br) resulting from the combination of the main magnetic field (B) and the compensation magnetic field (B1) by measuring the two mutually-orthogonal components of the resultant magnetic field (Br) respectively varying substantially as cosine and sine functions of the angle of the resultant magnetic field (Br).

5. A measurement magnetic sensor according to claim 4, **characterized in that** the system (10) for creating a compensation magnetic field (B₁) delivers a compensation magnetic field (B₁) of amplitude that has a fixed value that, combined with the minimum amplitude measured by the measuring system (4) and delivered by the main creation system (3), yields an amplitude value above the lower detection threshold (Si) of the measuring system (4).

6. A measurement magnetic sensor according to claim 4 or claim 5, **characterized in that** the compensation magnetic field (B1) created by said creation system (10) has a direction normal to the trajectory (T).

7. A measurement magnetic sensor according to claim 6, **characterized in that** the compensation magnetic field (B₁) created by said creation system (10) has a direction normal to the trajectory (T) that is linear or circular.

8. A measurement magnetic sensor according to any one of claims 4 to 7, **characterized in that** the system (3) for creating a main magnetic field (B) and the system (10) for creating a compensation magnetic field (B1) are provided by magnets.
